# EUROPEAN PATENT SPECIFICATION

(11) **EP 0 322 105 B1**
(45) Date of publication and mention of the grant of the patent: **12.04.1995**
(21) Application number: 88310857.3
(22) Date of filing: 17.11.1988
(51) Int. Cl.: H04L 12/54, H04L 12/58

(54) **Method of appending a reply in an electronic information system**
Verfahren zur Beiordnung einer Antwort in einem elektronischen Nachrichtensystem
Méthode d'adjonction d'une réponse dans un système électronique de traitement de l'information

(30) Priority: 23.12.1987 US 138229
(43) Date of publication of application: 28.06.1989
(73) Proprietor: International Business Machines Corporation, Armonk, N.Y. 10504 (US)
(72) Inventor: Cree, Charles Malcolm Napier, Austin Texas 78750 (US); Macphail, Margaret Gardner, Austin Texas 78703 (US)
(74) Representative: Bailey, Geoffrey Alan

(56) References cited:
- JOURNAL OF TELECOMMUNICATION NETWORKS, vol. 2, no. 4, 1983, pages 413-433, Rockville, Maryland, US; T.H. MYER: "Standards for Global Messaging: A Progress Report"
- COMPUTER, vol. 18, no. 10, October 1985, pages 106-116, Silver Spring, Maryland, US; S.SAKATA et al.: "A Distributed Interoffice Mail System"
- IEEE COMMUNICATIONS MAGAZINE, vol. 23, no. 3, March 1985, pages 23-28, New York, NY, US; K. NEMETH: "Principles of the Document Interchange Protocol for CCITT Telematic Services"

## Description

This invention relates to an electronic information system in which end users exchange documents, and more particular to a method of appending an original note to any reply transmitted in the system.

Present electronic mail systems allow end users to communicate within the system by sending notes, messages and documents to one or more recipient end users. Generally, upon receipt of one of the above-identified forms of communication, an end user has the option of reading the communication, filing the communication, forwarding the communication to other end users within the system, erasing the communication, responding to the communication or a combination of one or more of said options. In one known electronic mail system, if an end user decides to forward a received note to another end user and to include a note explaining why the note was forwarded, the system attaches the received note to the note explaining the transmittal. Moreover, if the end user decides to send a reply note in response to a received note, the system automatically attaches the received note to the reply note. If the end user receiving the reply note decides to forward the reply to another end user, the last end user receives a communication which is sometimes very confusing and very long. In COMPUTER, vol. 18, no. 10, October 1985, pages 106-116, Silver Spring, Maryland, US; S. SAKATA et al. is disclosed a method for appending and maintaining a reference to an original document exchanged within an electronic information processing system according to the preamble of claim 1.

As noted above, the recipient end user may decide to send a second note in response to the received note. In this case, the received note is not attached to the reply note. Thus, the recipient of the second note will have to mentally maintain the relationship between the note originally transmitted and the second note received.

Consequently, there is a need for an electronic mail system which will allow for user specified appending of an original note to any reply note generated in response thereto based upon the intent of the original sender.

According to the present invention, there is provided, in an electronic information processing system, having a plurality of end users exchanging documents therebetween, a method for appending and maintaining a reference to an original document exchanged within the system, comprising the steps of: determining whether distribution attributes associated with the original document include an append attribute; appending the original document to a reply document to be transmitted in response to the original document according to the append attribute associated with the original document; and transmitting, in response to the step of appending, the reply document and the original document appended thereto within the system to an end user selected to receive both the reply document and the original document characterised in that the step of appending the original document to the reply document is selective and based upon the intent of the sender of the original document as determined by a distribution attribute associated with the original document.

An embodiment of the invention will now be described, by way of example, with reference to the accompanying drawings, in which:
Fig. 1 shows a block diagram of a communication management system; and
Figs. 2 to 8 are flow charts illustrating detailed steps of a method embodying the present invention.

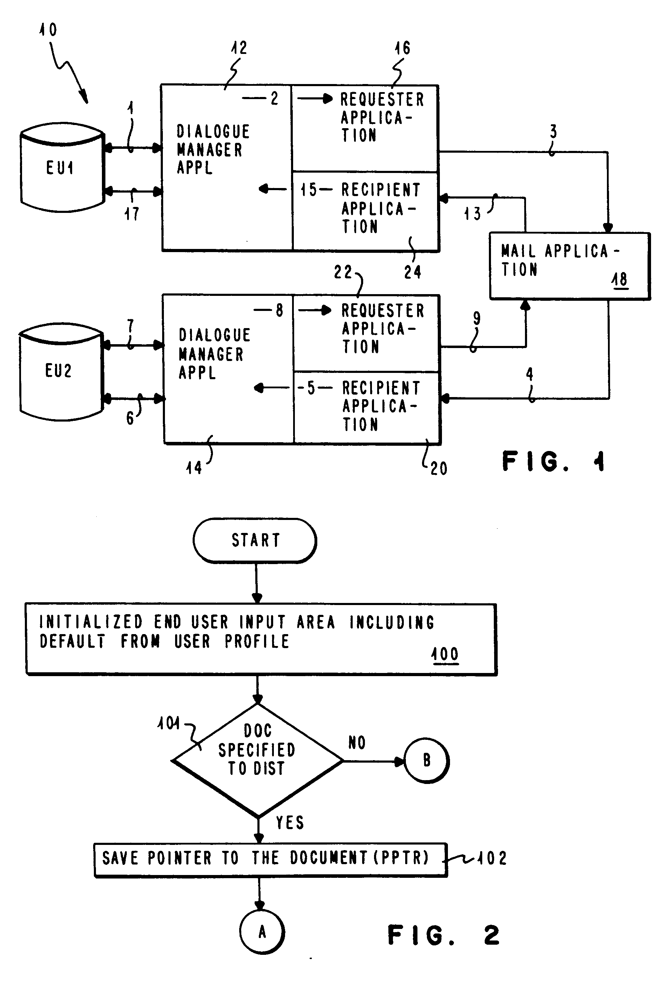

Referring to Fig. 1, there is shown a communication management system 10 which is a part of an electronic mail system. The communication management system 10 enables a first end user to create a note, message or document and transmit it to a designated end user or to a plurality of end users. Moreover, the system 10 allows the first end user to request that the original note, message or document be attached to any reply generated in response thereto. The attachment gives the user of system 10 flexibility in managing one's correspondence.

The first end user interact with a dialogue manager application 12 which is a screen manager. The dialogue manager application 12 presents the first end user with a plurality of screens which enables the end user to enter the information required to create the form of communication desired and any attributes to facilitate the distribution of the form of communication to the designated recipient end users. The information entered by the first end user includes addressing information for all of the recipients and any distribution attributes. The distribution attributes include a return-reply requested attribute and an append or do not append the reply to the original document or form of communication. The information entered further includes any requester/principal identifiers and a pointer to the note, message or document which is to be distributed.

The recipient end user may reply to a received note. System 10 allows the recipient end user to request a continuation of the dialogue by requesting that any reply to the recipient end user's reply be attached thereto. Thus, both users may manage their respective correspondence. Similarly to that noted above, the recipient end user interacts with an associated dialogue manager 14 providing the information which is necessary to distribute the reply. This information includes addressing information, which in most system is defaulted from the sender of the original distribution, any distribution attributes which may be defaulted by a recipient's user profile and the original distribution, an indication whether to append a response to the reply document, a pointer to the reply document and a pointer to the original document to be appended.

Referring again to Fig. 1, the dialogue manager application 12 receives a request from the first end user (EU1) to send a document to the second end user (EU2). The request includes an indication that the EU1 desires a reply and that EU1 wants the original document appended to the reply. The dialogue manager application 12 then transmits the request to a requester application 16. The requester application 16 then transmits the request and the document to a mail application 18. The mail application 18 delivers the request and the document to a recipient application 20 which then passes the document and the request to the dialogue manager application 14. Thereafter, the dialogue manager application 14 presents the document and any additional information to EU2.

EU2 receives the document and the request for a reply and for appending the original to any reply to be generated. If EU2 decides to respond to the document sent by EU1, EU2 interacts with dialogue manager application 14 to generate the reply to the document sent by EU1. The dialogue manager application 14 transmits the request to a requester application 22. The request is then routed to the mail application 18 for delivery to a recipient application 24. The recipient application 24 passes the reply and any related information to the dialogue manager 12 for presentation to EU1.

Set out below is an illustration of an application program which is usable by the dialogue manager application 12 for distributing a document to EU2. The program is in program design language from which source code and machine code are derivable.

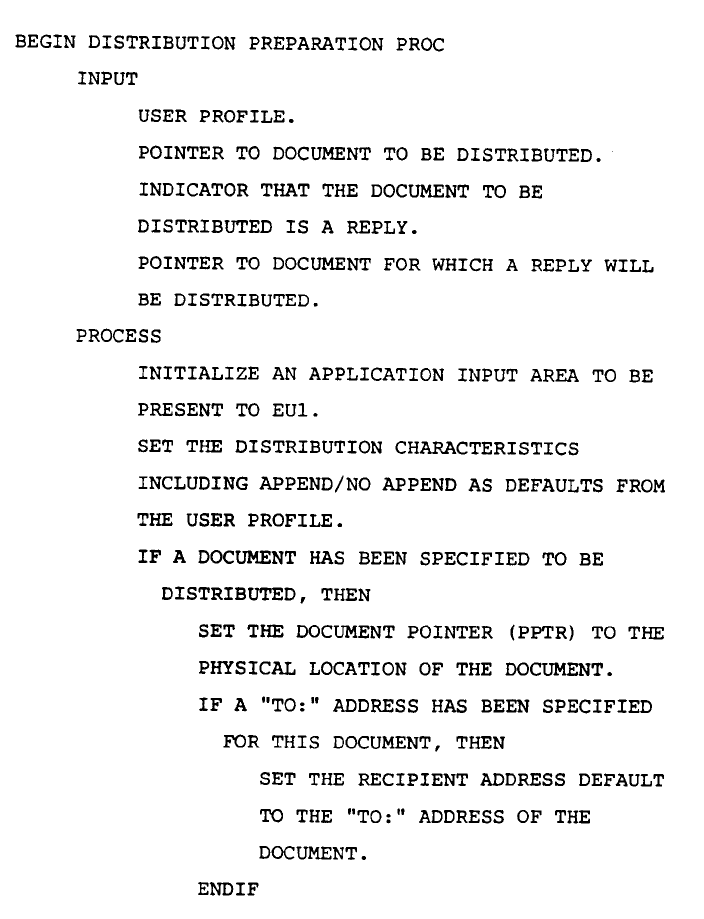

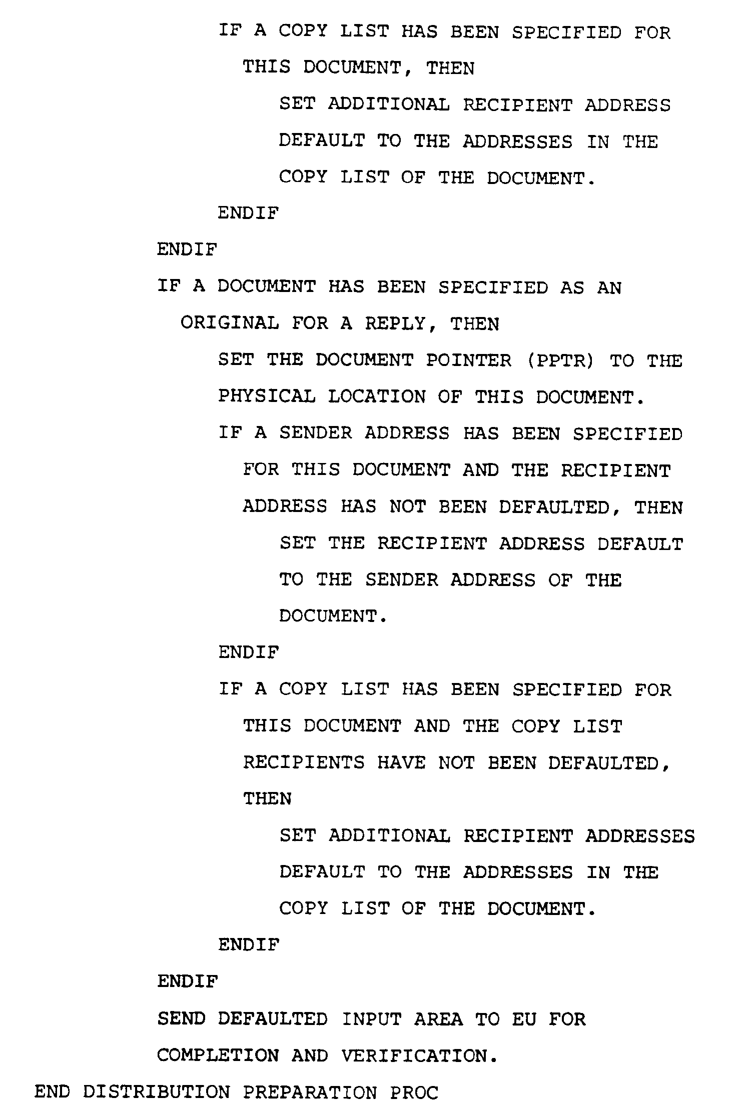

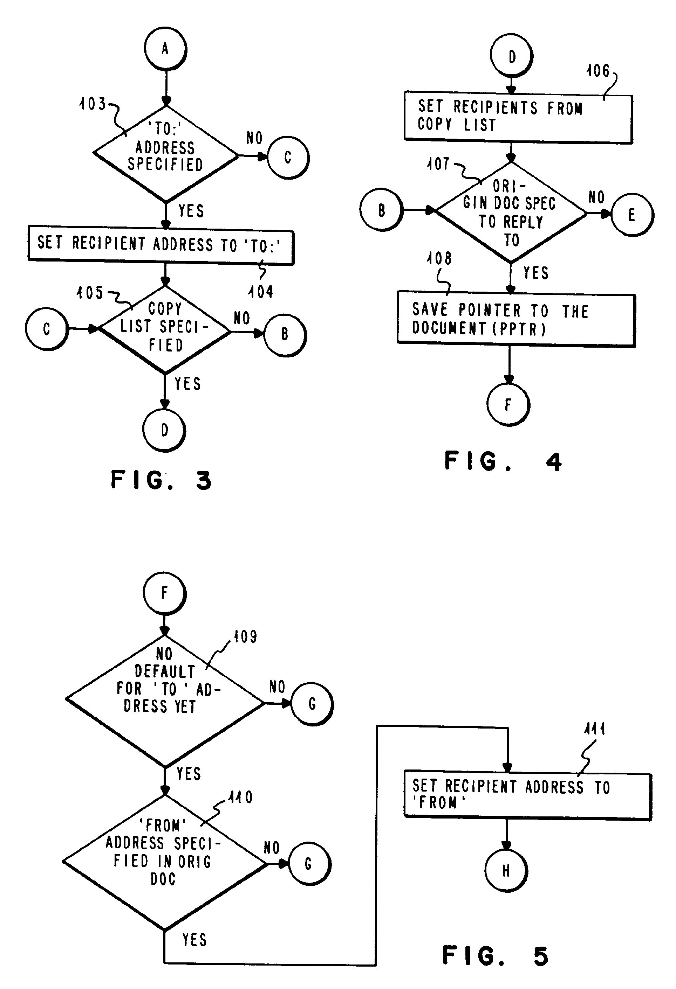

Referring to Figs. 2 to 6, there is shown a flow chart for the distribution preparation application in gathering the necessary information from the EU1. Step 100 initializes the end user input area including any defaults from the EU1's user profile. The EU1 user profile can be used to setup some of the defaults in the input area. Any or all of the defaults can be overwritten by the EU1 when the input are is presented thereto. Step 101 determines whether EU1 has specified a particular document to be distributed. If a document was specified, step 102 saves a pointer to the document. Step 103 determines whether the particular document contains an addressee in an associated data area of the document or within a referenced place within the document itself. If the addressee is specified in the document, step 104 sets the specified recipient address. Step 105 determines if a copy list has been specified in an associated data area of the document or within a referenced place within the document itself. Step 106 sets the recipient address from the copy list. Step 107 determines whether EU1 may have specified that a reply for a particular document be distributed at the time the application was first called. For example, after viewing a list of documents, EU1 may have selected a document to which EU1 wanted a reply. Step 108 saves a pointer to the specified document. Step 109 determines if there is a default addressee for the document to be distributed. Step 110 determines whether there is a default address specified in a original document. This occurs when a reply to a document is being generated. Step 111 sets the recipients address to the sender's address of the original document. Step 112 determines if a copy list was specified in the original document. Step 113 sets the recipients addressee from the copy list contained in the original document. Step 114 then presents the entered data to EU1 for review.

Set out below is an illustration of an application program which is usable by the dialogue manager application 12 for creating and then distributing a document to EU2. The program is in program design language from which source code and machine code are derivable.

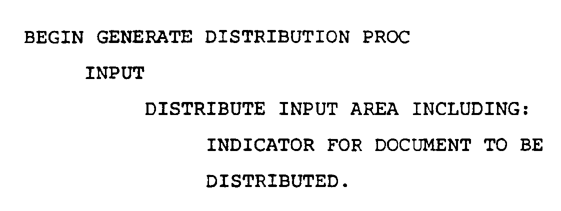

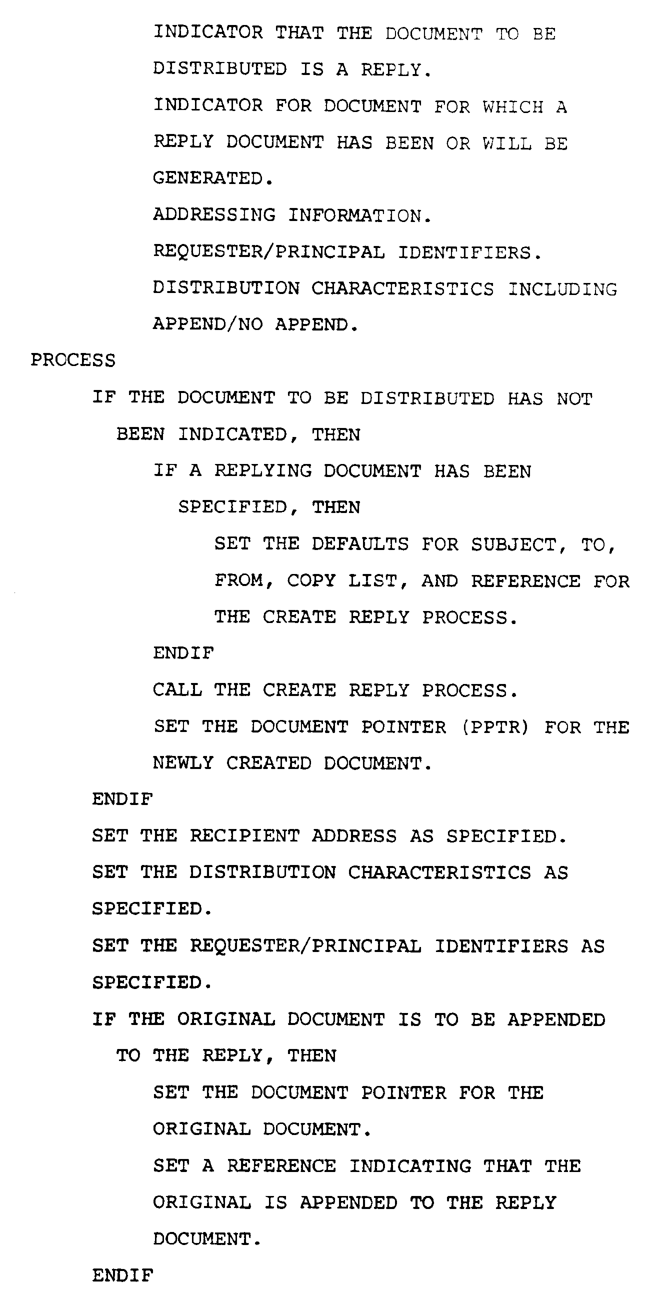

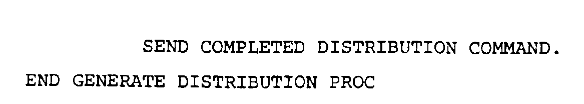

If EU1 is going to generate a document as a part of the distribution request, then a document will not be indicated. However, if EU1 wants to distribute an existing document, then EU1 must indicate the document as input to the generate distribution process. Either the document or a data area associated with the document for which a reply is to be generated may contain values for the subject, to, from, copy list and reference. These values can be set in the reply which is to be created by EU1. The pointer to the new document's physical location must be saved. If the original document for which the reply has been created is to be appended and sent with the reply document, then the address for the original must also be saved. If the original document for which the reply has been created is to be appended and sent with the reply document, then the append relation must be indicated in the distribution. The complete distribution request is then transmitted to the requester application 16 for transmittal to EU2.

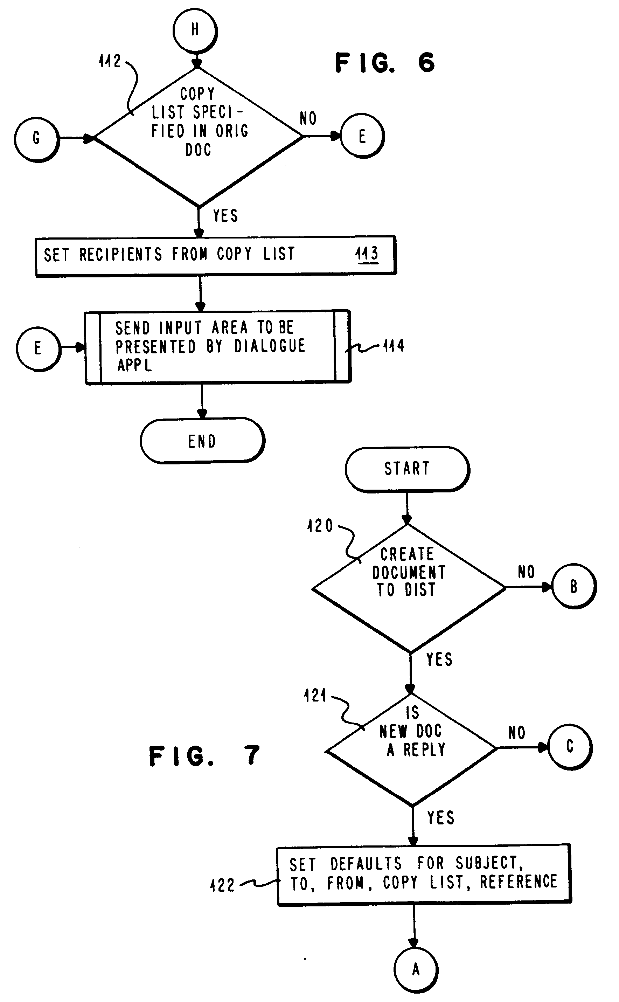

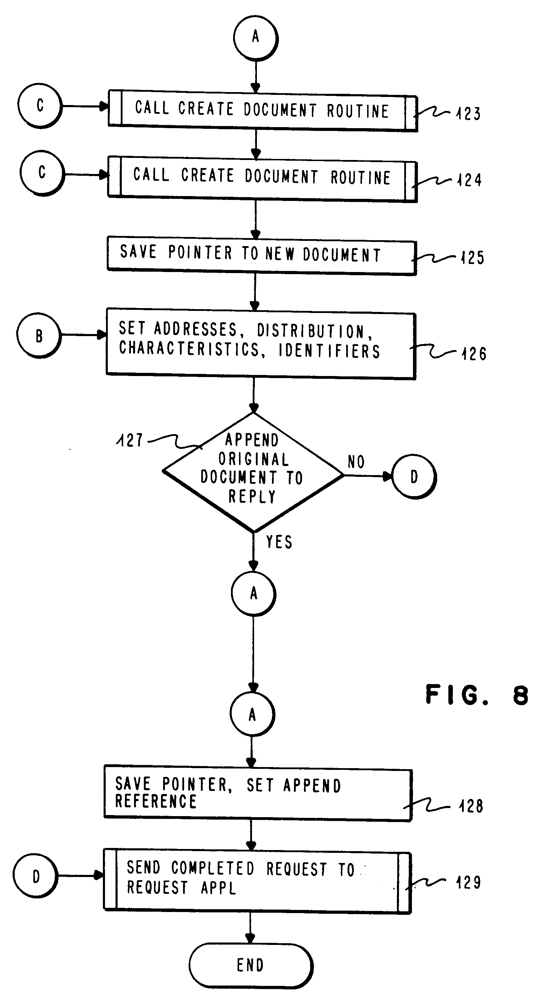

Referring to Figs. 7 and 8, there is shown a flow chart for the generate distribution process in distributing an original document or the reply to the original document. Step 120 determines whether EU1 wants to create a document to be distributed. Step 121 determines if the document to be created is a reply document. If the document is a reply document, step 122 sets the defaults for the subject, the addressees, copy list and any references. Steps 123 and 124 call a create document routine to create the reply document or an original document. The create document routine in electronic mail system is well known in the art and will not be discussed herein. Step 125 saves the pointer for the newly created document and step 126 sets the address, distribution characteristics and any identifiers set forth by EU1. Step 127 determines whether the original document should be appended to the reply. The pointer and the append reference are set in step 128. Step 129 transmits the completed request to the requester application 16 for distribution to EU2.

As noted above, the mail and recipient applications are well known applications in electronic mail systems and are not an integral part of the present invention and will not be discussed herein.

## Claims

1. In an electronic information processing system, having a plurality of end users (EU1, EU2) exchanging documents therebetween, a method for appending and maintaining a reference to an original document exchanged within the system, comprising the steps of:
determining (127) whether distribution attributes associated with the original document include an append attribute;
appending the original document to a reply document to be transmitted in response to the original document according to the append attribute associated with the original document; and transmitting, in response to the step of appending, the reply document and the original document appended thereto within the system to an end user selected to receive both the reply document and the original document characterised in that the step (127, 128, 129) of appending the original document to the reply document is selective and based upon the intent of the sender (EU1) of the original document as determined by a distribution attribute associated with the original document.

2. A method according to claim 1 further comprising the step (109, 123) of establishing whether an address for the second end user is a default address.

## Patentansprüche

1. Verfahren zum Anhängen und Beibehalten eines Vermerks an ein Originaldokument, das in einem elektronischen Informationsverarbeitungssystem mit einer Vielzahl von Endanwendern (EU1, EU2), die innerhalb des Systems miteinander Dokumente austauschen, ausgetauscht wird, das die folgenden Schritte umfaßt:
Feststellen (127), ob die dem Originaldokument zugeordneten Verteilungsattribute ein "Append"- (Anhängen)-Attribut beinhalten;
Anhängen des Originaldokuments an ein Antwortdokument, das in Beantwortung des Originaldokuments zu übermitteln ist, gemäß dem Append-Attribut, das dem Originaldokument zugeordnet ist; und als Antwort auf den Anhängeschritt, Übermitteln des Antwortdokuments und des daran angehängten Originaldokuments innerhalb des Systems an einen Endanwender, der angewählt wurde, um sowohl das Antwortdokument als auch das Originaldokument zu erhalten, dadurch gekennzeichnet, daß der Schritt (127, 128, 129) des Anhängens des Originaldokuments an das Antwortdokument selektiv ist und auf der Absicht des Absenders (EU1) des Originaldokuments beruht, wie durch ein dem Originaldokument zugeordnetes Verteilungsattribut bestimmt wird.

2. Verfahren gemäß Anspruch 1, das ferner den Schritt (109, 123) umfaßt, festzustellen, ob eine Adresse für den zweiten Endanwender eine Vorgabeadresse ist.

## Revendications

1. Dans un système de traitement d'information électronique avec une pluralité d'utilisateurs finaux (EU1, EU2) échangeant des documents entre eux, une méthode pour adjoindre et retenir une référence à un document original échangé dans le système, comprenant les étapes suivantes:
- la détermination (127) de l'inclusion ou non d'un attribut d'adjonction dans des attributs de distribution associés au document original;
- l'adjonction du document original à un document de réponse à transmettre en réponse au document original suivant l'attribut d'adjonction associé au document original;
- et la transmission en réponse à l'étape d'adjonction, du document de réponse et du document original adjoint à celui ci, dans le système, à un utilisateur sélectionné pour recevoir à la fois le document de réponse et le document original;
caractérisée en ce que l'étape (127, 128, 129) d'adjonction du document original au document de réponse est sélective et basée sur l'intention de l'envoyeur (EU1) du document original, telle que déterminée par un attribut de distribution associé au document original.

2. Une méthode selon la revendication 1 comprenant en outre l'étape (109, 123) pour établir si oui ou non, une adresse du second utilisateur final est une adresse par défaut.
